# EUROPEAN PATENT SPECIFICATION

(11) **EP 0 408 320 B1**
(45) Date of publication and mention of the grant of the patent: **25.05.1994**
(21) Application number: 90307550.5
(22) Date of filing: 10.07.1990
(51) Int. Cl.: G01V 3/12, G01V 3/15

(54) **Identification of hidden pipes etc.**
Identifizierung von verborgenen Röhren usw.
Identification de tuyaux cachés etc.

(30) Priority: 11.07.1989 GB 8915853
(43) Date of publication of application: 16.01.1991
(73) Proprietor: UPONOR BV, 5340 AT Oss (NL)
(72) Inventor: Reeves, Anthony Vincent, Selston, Notts. NG16 6FN (GB)
(74) Representative: Hall, Robert Leonard

(56) References cited:
- EP-A- 0 268 420
- EP-A- 0 398 527
- FR-A- 2 164 467
- FR-A- 2 531 234
- US-A- 4 119 908

## Description

This invention relates to a method of identifying and providing information concerning hidden pipelines, cables, ducts, passages etc. hereinafter referred to directly as "pipelines and the like".

One of the problems in dealing with hidden (e.g. underground) pipelines or the like is to identify the location of the pipe, cable etc., the position at which bends occur, the position at which branches occur, and features such as the nature of the material from which the pipeline, or the like, is made, the contents of the pipe, the size of the pipe, the pressure of the fluid in the pipe and the nature of the fluid in the pipe.

European Patent Application No. 0 268 420 discloses a marker (2) for positioning near a buried object (1), the marker (2) including a passive resonant type antenna (6) which resonates when an electromagnetic wave of the resonant frequency of the antenna (6) is transmitted toward the marker (2).

French Patent Application No. 2164467 discloses a pipeline consisting of pipe-fittings jointed together, wherein an element of magnetic material is disposed at each join to enable detection of the pipeline.

European Patent Application No. 0 398 527 discloses an electrofusion marker (10) for a thermoplastic pipe fitting (12). The arrangement includes a passive resonant circuit (22, 32) which resonates when electromagnetic radiation of the resonant frequency is directed to the marker (10), to enable the marker to be detected.

An object of the present invention is to provide a method for identifying a pipeline or the like and for providing information dealing with the factors mentioned, by way of example, and other matters.

In accordance with the present invention there is provided a method of identifying and providing information concerning pipelines and the like which method comprises the steps of interrogating the pipeline (10) or the like, said pipeline having a series of interrogatable information containing elements (12,12A) located at intervals along the pipeline and adapted to convey information about the position of the pipeline, by means of an interrogating device comprising a transmitter/receiver (14) which feeds a signal to an antenna (16) located at the end of a flexible cable (15) or rod located close to the ground, characterised in that the interrogatable elements (12, 12A) are self-powered and respond to the signal emitted by the antenna to produce an answering signal conveying further information which is decoded and recorded by the transmitter/receiver, said information concerning the nature of the material of the pipe and/or the nature of the fluid conveyed by the pipe, and/or the date of installation of the pipe and/or its depth below ground and/or its alignment, and/or the size of the pipe, and/or the contents of the pipe, and/or the pressure of the fluid in the pipe.

The interrogatable elements may for instance be snap fitted into recesses in the surfaces of the pipe or they may be buried in the material of the pipe or they may be attached for example by use of clips or straps.

Preferably the information containing elements are located at specific points on the pipeline for example at a junction, at a bend, at a point where the service is taken off the pipeline, at a blind end of the pipe and so on.

The information containing elements when interrogated may also provide information concerning the nature of the material of the pipe, the nature of the fluid conveyed by the pipe e.g. gas, water, chemicals etc.

The device for interrogating the pipe preferably comprises a transmitter/receiver which feeds a signal, such as an RF signal, to an antenna which may be at the end of a flexible cable or rod so that it may be located close to the ground. The transmitter receiver may have attached to it a power supply and also a decoder and recorder so that information received from the information containing elements on the pipeline may be decoded and recorded for future use. There may also be a display on the transmitter receiver which will display information received from the pipeline.

One embodiment of the method of the invention will now be described with reference to the accompanying drawings in which:-
Figure 1 shows, diagrammatically, a section of a pipeline and the apparatus used to interrogate the information containing element on the pipeline; and
Figure 2 shows diagrammatically in plan a complicated pipeline with information containing elements capable of being interrogated located at intervals along the pipeline.

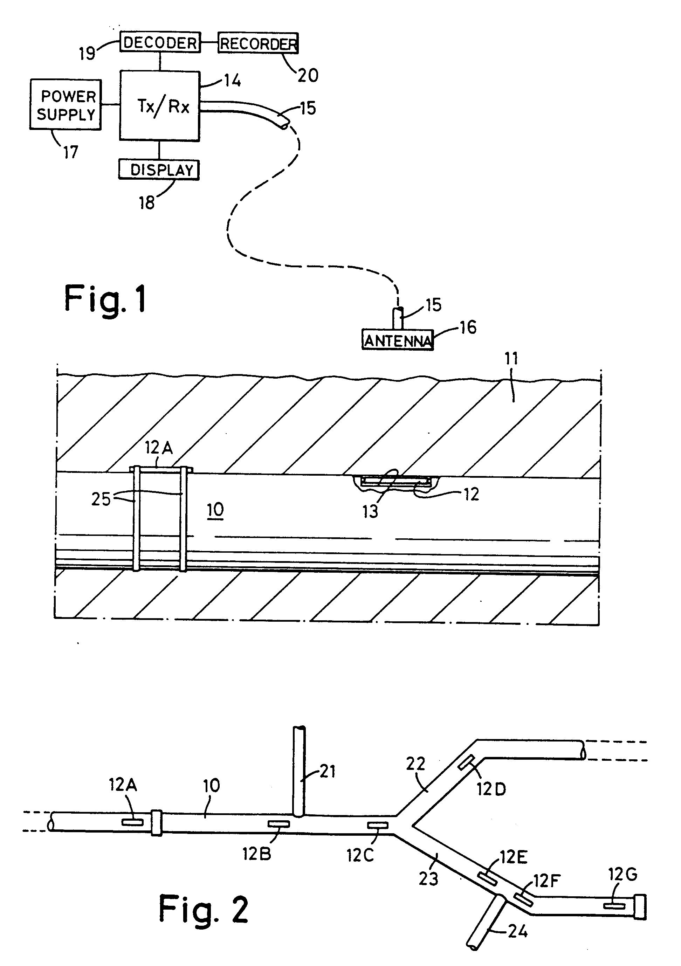

In Figure 1 a pipeline 10 is located below ground level 11 and has on it an information containing element which is interrogatable. The information containing element is shown as clipped into a recess 13 in the pipe although it may be, as mentioned above, attached by any other means.

One alternative is to have the element in the form of an inertly packaged coded tag 12A attached to the pipe by straps as seen in Figure 1.

The apparatus for interrogating the pipeline comprises a transmitter/receiver 14 connected by a flexible cable 15 to an antenna 16. The transmitter receiver has a power supply 17 and display 18 on which information received from the pipeline may be displayed. Connected to the transmitter receiver 14 is a decoder 19 and a recorder 20 which may for instance be a simple tape recorder. On interrogation of the pipeline by the transmitter receiver the transmitted RF signal causes the interrogatable element 12 to respond and return a signal which is picked up by the antenna 16 and supplied to the transmitter receiver 14 where it is decoded and recorded and also displayed on the display 18. Information displayed may for instance provide details as to depth and direction of alignment of the pipe 10, the material of which it is made, the fluid which is flowing through it etc.

The usefulness of this invention can be particularly seen in relation to Figure 2 which shows a complicated pipe run in plan. The pipe run is assumed to be buried underground at varying depths and at each point where information is relevant one of the information containing elements 12 is buried in the pipe 10 or is attached to the pipe 10. For example element 12A is adjacent to the joint in the pipeline. 12B is adjacent the point where a branch pipe 21 is taken off. 12C is at a point where the pipe 10 forms two branches 22 and 23. 12D is at a point where the pipe 22 bends. 12E is at a point where a branch pipe 24 goes off. 12F is at a bend and 12G is at a blanked off end of a branch of a pipe.

There will be on long straight lengths of the pipe information containing elements at intervals of say 5 metres which will enable the position of the long straight pipe to be located and information to be obtained from it. The invention may be applied to all kinds of pipe whether they are carrying gas, water, chemicals, telephone or electric cables etc.

The invention could also be applied to tunnels and underground passages for example to the channel tunnel so that in the event of external repairs to the tunnel being required it could easily be located on or below the sea bed.

## Claims

1. A method of identifying and providing information concerning pipelines and the like, which method comprises the steps of interrogating the pipe line (10) or the like, said pipeline having a series of interrogatable information containing elements (12,12A) located at intervals along the pipeline and adapted to convey information about the position of the pipeline, by means of an interrogating device comprising a transmitter/ receiver (14) which feeds a signal to an antenna (16) located at the end of a flexible cable (15) or rod located close to the ground, characterised in that the interrogatable elements are self-powered and respond to the signal emitted by the antenna to produce an answering signal conveying further information which is decoded and recorded by the transmitter/receiver, said information concerning the nature of the material of the pipe and/or the nature of the fluid conveyed by the pipe, and/or the date of installation of the pipe and/or its depth below ground and/or its alignment, and/or the size of the pipe, and/or the contents of the pipe, and/or the pressure of the fluid in the pipe.

2. A method according to claim 1, characterised in that the interrogatable elements (12, 12a) are snap fitted into recesses (13) in the surfaces of the pipe(10) or buried in the material of the pipe or attached by use of clips or straps (25).

3. A method according to claim 1 or 2, characterised in that the information containing elements are located at a junction, at a bend, at a point where the service is taken off the pipeline, or at a blind end of the pipe.

4. A method according to claim 3, characterised in that the transmitter/receiver is provided with a display (18) upon which information received from the pipeline is displayed.

## Patentansprüche

1. Verfahren, um Rohrleitungen und dergleichen zu identifizieren und Information darüber zu liefern, wobei das Verfahren die folgenden Schritte aufweist: Abfragen der Rohrleitung (10) oder dergleichen, wobei die Rohrleitung eine Reihe von abfragbaren, Information enthaltenden Elementen (12, 12A) hat, die in Abständen entlang der Rohrleitung angeordnet und ausgebildet sind, um Information über die Position der Rohrleitung zu liefern, mittels einer Abfrageeinrichtung, die einen Sender/Empfänger (14) aufweist, der in eine Antenne (16), die an dem Ende eines nahe dem Boden angeordneten flexiblen Kabels (15) oder Stabs angeordnet ist, ein Signal einspeist, dadurch gekennzeichnet, daß die abfragbaren Elemente selbstgespeist sind und auf das von der Antenne abgegebene Signal ansprechen, um ein Antwortsignal zu erzeugen, das weitere Information liefert, die von dem Sender/Empfänger decodiert und aufgezeichnet wird, wobei die Information die Beschaffenheit des Materials des Rohrs und/oder die Beschaffenheit des von dem Rohr geförderten Fluids und/oder das Installationsdatum des Rohrs und/oder seine Tiefe unter der Erdoberfläche und/oder seine Ausfluchtung und/oder die Größe des Rohrs und/oder den Inhalt des Rohrs und/oder den Druck des Fluids in dem Rohr betrifft.

2. Verfahren nach Anspruch 1, dadurch gekennzeichnet, daß die abfragbaren Elemente (12, 12a) in Ausnehmungen (13) in den Oberflächen des Rohrs (10) eingerastet oder in dem Material des Rohrs vergraben oder unter Verwendung von Clips oder Bändern (25) befestigt sind.

3. Verfahren nach Anspruch 1 oder 2, dadurch gekennzeichnet, daß die Information enthaltenden Elemente an einer Abzweigstelle, an einem Bogen, an einem Punkt, an dem das Betriebsmittel aus der Rohrleitung entnommen wird, oder an einem blinden Ende des Rohrs angeordnet sind.

4. Verfahren nach Anspruch 3, dadurch gekennzeichnet, daß der Sender/Empfänger mit einem Display (18) versehen ist, auf dem von der Rohrleitung empfangene Information angezeigt wird.

## Revendications

1. Procédé d'identification et de fourniture d'informations concernant des tuyaux et analogues, ce procédé comprenant les étapes consistant à interroger le tuyau (10) ou analogue, ce tuyau possédant une série d'éléments (12, 12a) contenant des informations interrogeables et disposés par intervalles, le long du tuyau et aptes à transférer des informations se rapportant à la position du tuyau, au moyen d'un dispositif d' interrogation comprenant un émetteur/récepteur (14) qui fournit un signal à une antenne (16) disposée à l'extrémité d'un câble flexible (15) ou tige situé à proximité du sol, caractérisé en ce que les éléments interrogeables sont alimentés en puissance de manière autonome et répondent au signal émis par l'antenne pour produire un signal de réponse acheminant des informations supplémentaires qui sont décodées et enregistrées par l'émetteur/récepteur, lesdites informations concernant la nature du matériau du tuyau et/ou la nature du fluide convoyé par ce tuyau, et/ou la date d'installation du tuyau et/ou sa profondeur en dessous du sol, et/ou son alignement, et/ou la taille du tuyau, et/ou les contenus du tuyau, et/ou la pression de fluide dans le tuyau.

2. Procédé selon la revendication 1, caractérisé en ce que les éléments interrogeables (12,12a) sont logés par montage rapide à l'intérieur de renfoncements (13) dans les surfaces du tuyau (10) ou sont noyés dans le matériau du tuyau ou attachés par l'intermédiaire d'agrafes ou pinces élastiques (25).

3. Procédé selon la revendication 1 ou 2, caractérisé en ce que les éléments contenant des informations sont situés au niveau d'une jonction, à un coude, à un point de prélèvement de service du tuyau, ou à une extrémité borgne du tuyau.

4. Procédé selon la revendication 3, caractérisé en ce que l'émetteur/récepteur est pourvu d'une visualisation (18) sur laquelle les informations reçues depuis le tuyau sont visualisées.
